# EUROPEAN PATENT APPLICATION

(11) **EP 3 040 383 A1**
(43) Date of publication of application: **06.07.2016**
(21) Application number: 14840577.2
(22) Date of filing: 29.08.2014
(51) Int. Cl.: C09C 1/00, C01G 9/00, C08K 3/22, C08L 101/00, C09C 1/04, C09C 1/40, C09C 3/06, C09D 5/33, C09D 7/12, C09D 201/00

(54) **BLACK PIGMENT HAVING INFRARED-REFLECTING PROPERTIES, AND PAINT AND RESIN COMPOSITION THAT USE SAID BLACK PIGMENT HAVING INFRARED-REFLECTING PROPERTIES**

(30) Priority: 30.08.2013 JP 2013179773
(71) Applicant: Toda Kogyo Corporation, Hiroshima 732-0828 (JP)
(72) Inventor: MARUYAMA, Shinsuke, Otake-shi Hiroshima 739-0652 (JP); KOUZAWA, Minoru, Otake-shi Hiroshima 739-0652 (JP); TETSUOKA, Toyoaki, Otake-shi Hiroshima 739-0652 (JP); SHIMANE, Kazumitsu, Otake-shi Hiroshima 739-0652 (JP); WATANABE, Kozo, Otake-shi Hiroshima 739-0652 (JP); FUJII, Yasuhiko, Otake-shi Hiroshima 739-0652 (JP)
(74) Representative: Puschmann Borchert Bardehle Patentanwälte Partnerschaft mbB
(86) International application number: PCT/JP2014/072756
(87) International publication number: WO 2015/030182

(57) **Abstract**

The present invention provides an infrared reflecting black pigment comprising no harmful elements such as Cr⁶⁺ and the like, which exhibits excellent infrared reflecting properties and acid resistance. The present invention relates to an infrared reflecting black pigment that comprises a composite oxide comprising Cu and Zn or a composite oxide comprising Cu, Zn and Al, and has a blackness (L* value) of not more than 29 and a near infrared reflectance of not less than 40%, as well as a paint and a resin composition using the infrared reflecting black pigment.

## Description

### TECHNICAL FIELD

The present invention relates to an infrared reflecting black pigment that is capable of providing a heat-shielding paint comprising no harmful elements and exhibiting excellent infrared reflecting properties.

### BACKGROUND ART

In the roads, buildings, storage tanks, automobiles, ships, etc., which are used or located out of doors, an inside temperature thereof is increased when exposed to solar radiation. For this reason, an outside surface of buildings, automobiles, etc., has been painted with a white to light color in order to reflect sunlight thereon, and thereby enhance a heat-shielding effect thereof to some extent.

However, roofs of buildings exposed to outside are frequently painted with a deep to black color to make stains or contamination thereon unremarkable when viewed from outside. Buildings, automobiles, etc., whose outside surface is painted with a deep to black color, tend to absorb sunlight as compared to those having an outside surface painted with a light to white color, and therefore tend to suffer from considerable increase in inside temperature when exposed to solar radiation. Such a high inside temperature of buildings, automobiles, etc., is undesirable for transportation or storage of products.

From the standpoint of saving energies required for preventing global warming problems, it has been strongly demanded to suppress the increase in inside temperature of buildings, automobiles, etc., whose outside surface exhibits a deep color to a black color.

There are conventionally known heat-shielding black paints for reducing increase in the inside temperature of buildings and automobiles whose outside surfaces are painted with a deep to black color (for example, refer to Patent Literatures 1 to 3).

### CITATION LIST

### PATENT LITERATURE

Patent Literature 1: Japanese Patent Application Laid-Open (KOKAI) No. 2007-197570
Patent Literature 2: Japanese Patent Application Laid-Open (KOKAI) No. 2010-65201
Patent Literature 3: Japanese Patent Application Laid-Open (KOKAI) No. 2010-150354

### SUMMARY OF INVENTION

### TECHNICAL PROBLEM

As described above, some black pigments not only comprising no harmful elements but also having excellent infrared reflecting properties have been conventionally developed. However, these black pigments have also failed to exhibit sufficient properties, and it has therefore been demanded to further improve the black pigments.

In Patent Literatures 1 to 3, there are described black pigments comprising various elements but comprising no harmful elements, and exhibiting excellent infrared reflecting properties. However, the reflectance of these black pigments as measured at a wavelength of 1500 nm in an infrared range tends to hardly exhibit a sufficiently high reflectance. In Patent Literature 3, it is described that a mixture of cupric oxide and an extender pigment or a white pigment is used as an infrared reflecting pigment. However, such a mixture tends to hardly exhibit desired properties.

An object of the present invention is to provide an infrared reflecting black pigment that is a composite oxide comprising Cu and Zn as main components, has a good black color and exhibits excellent infrared reflecting properties. The infrared reflecting black pigment of the present invention comprises no harmful elements such as Cr⁶⁺ and Co.

### SOLUTION TO PROBLEM

The above object of the present invention can be achieved by the following aspects of the present invention.

That is, according to the present invention, there is provided an infrared reflecting black pigment which comprises a composite oxide comprising Cu and Zn and which has a Cu content of 20 to 95 mol% based on a total amount of whole metal elements and a Zn content of 5 to 80 mol% based on a total amount of whole metal elements (Invention 1).

In addition, according to the present invention, there is provided an infrared reflecting black pigment which comprises a composite oxide comprising Cu, Zn and Al and which has a Cu content of 20 to 97 mol% based on a total amount of whole metal elements, a Zn content of 1 to 30 mol% based on a total amount of whole metal elements, and an Al content of 2 to 60 mol% based on a total amount of whole metal elements (Invention 2).

Also, according to the present invention, there is provided the infrared reflecting black pigment as described in the above Invention 1 or 2, wherein the black pigment has a blackness (L* value) of not more than 29 (Invention 3).

Also, according to the present invention, there is provided the infrared reflecting black pigment as described in any one of the above Inventions 1 to 3, wherein the black pigment has a near infrared reflectance of not less than 40% (Invention 4).

Also, according to the present invention, there is provided the infrared reflecting black pigment as described in any one of the above Inventions 1 to 4, wherein the black pigment has an acid resistance of not more than 1000 ppm (Invention 5).

Also, according to the present invention, there is provided the infrared reflecting black pigment as described in any one of the above Inventions 1 to 5, wherein a surface of the infrared reflecting black pigment is surface-treated with a compound of at least one element selected from the group consisting of Si, Al, Zr, Ti, Zn and P or an organic surface-treating agent (Invention 6).

Further, according to the present invention, there is provided a paint comprising the infrared reflecting black pigment as described in any one of the above Inventions 1 to 6 (Invention 7).

Furthermore, according to the present invention, there is provided a resin composition colored with the infrared reflecting black pigment as described in any one of the above Inventions 1 to 6 (Invention 8).

### ADVANTAGEOUS EFFECTS OF INVENTION

The infrared reflecting black pigment according to the present invention comprises a composite oxide comprising Cu and Zn or a composite oxide comprising Cu, Zn and Al, which is a safe black pigment comprising no harmful elements such as Cr⁶⁺ and Co, and exhibits excellent infrared reflecting properties and acid resistance, and therefore is suitable as an infrared reflecting black pigment.

### DESCRIPTION OF EMBODIMENTS

The present invention is described in more detail below.

First, the infrared reflecting black pigment according to the present invention is described. Meanwhile, unless otherwise specifically noted, the following explanation is common to the Invention 1 and the Invention 2.

The infrared reflecting black pigment according to the present invention comprises a composite oxide comprising Cu and Zn or a composite oxide comprising Cu, Zn and Al. The infrared reflecting black pigment according to the present invention is suitable as an inexpensive infrared reflecting black pigment, since the black pigment comprises no expensive elements such as Co.

In the case where the infrared reflecting black pigment according to the present invention is a composite oxide comprising Cu and Zn, the Cu content of the black pigment is 20 to 95 mol%, and the Zn content of the black pigment is 5 to 80 mol%, both based on a total amount of whole metal elements, with the proviso that a total amount of Cu and Zn is 100 mol%. When the Cu content of the black pigment lies in the above-specified range, the resulting infrared reflecting black pigment can be enhanced in blackness and near infrared reflectance. Further, when the Zn content of the black pigment lies in the above-specified range, the amount of Cu eluted upon subjecting the black pigment to an acid resistance test can be reduced. The Cu content of the infrared reflecting black pigment is preferably 24 to 94 mol%, and more preferably 28 to 93 mol%. Further, the Zn content of the infrared reflecting black pigment is preferably 6 to 79 mol% and more preferably 7 to 78 mol%.

In the case where the infrared reflecting black pigment according to the present invention is a composite oxide comprising Cu, Zn and Al, the Cu content of the black pigment is 20 to 97 mol%, the Zn content of the black pigment is 1 to 30 mol%, and the Al content of the black pigment is 2 to 60 mol%, all based on a total amount of whole metal elements, with the proviso that a total amount of Cu, Zn and Al is 100 mol%. When the Cu content of the black pigment lies in the above-specified range, the resulting infrared reflecting black pigment can be enhanced in blackness and near infrared reflectance. Further, when the Zn content of the black pigment lies in the above-specified range, the amount of Cu eluted upon subjecting the black pigment to an acid resistance test can be reduced. Further, when the Al content of the black pigment lies in the above-specified range, the true specific gravity of the black pigment can be readily controlled to 6.5 g/cm³ or less, so that the black pigment can be advantageously used for forming a paint. The Cu content of the infrared reflecting black pigment is preferably 24 to 96 mol%, and more preferably 28 to 95 mol%. Further, the Zn content of the infrared reflecting black pigment is preferably 2 to 29 mol% and more preferably 3 to 28 mol%. Further, the Al content of the infrared reflecting black pigment is preferably 4 to 58 mol% and more preferably 6 to 56 mol%.

In addition, the infrared reflecting black pigment according to the present invention may include unavoidable impurities derived from various raw materials.

The infrared reflecting black pigment according to the present invention preferably has an average particle diameter of 0.02 to 5.0 µm. When the average particle diameter of the black pigment is more than 5.0 µm, the particle size of the black pigment tends to be excessively large, resulting in deterioration in tinting strength thereof. When the average particle diameter of the black pigment is less than 0.02 µm, the resulting pigment tends to be hardly dispersed in a vehicle. The average particle diameter of the infrared reflecting black pigment is more preferably 0.025 to 4.0 µm and even more preferably 0.04 to 2.0 µm.

The infrared reflecting black pigment according to the present invention preferably has a BET specific surface area of 1 to 100 m²/g. When the BET specific surface area of the black pigment is less than 1 m²/g, the resulting pigment tends to be in the form of coarse particles or mutually sintered particles, and therefore tends to be deteriorated in tinting strength. On the other hand, when the BET specific surface area of the black pigment is more than 100 m²/g, the resulting particles tend to be aggregated together owing to increase in intermolecular force therebetween which is caused by finely divided particles, so that deterioration in dispersibility of the resulting particles tends to occur. The BET specific surface area of the infrared reflecting black pigment is more preferably 1.5 to 75 m²/g and even more preferably 1.8 to 65 m²/g.

The infrared reflecting black pigment according to the present invention preferably has a lightness (L* value) of not more than 29. When the lightness (L* value) of the black pigment is out of the above-specified range, the resulting pigment tends to hardly exhibit a sufficient blackness required as a black pigment. The lightness (L* value) of the infrared reflecting black pigment is preferably not more than 28 and more preferably not more than 25.

The infrared reflecting black pigment according to the present invention preferably has an a* value of -2 to +10. When the a* value of the black pigment is out of the above-specified range, the resulting pigment tends to hardly exhibit a sufficient blackness required as a black pigment. The a* value of the infrared reflecting black pigment is more preferably -1 to +5.

The infrared reflecting black pigment according to the present invention preferably has a b* value of -5 to +10. When the b* value of the black pigment is out of the above-specified range, the resulting pigment tends to hardly exhibit a sufficient blackness required as a black pigment. The b* value of the infrared reflecting black pigment is more preferably -4 to +5.

These lightness (L* value), the a* value and the b* value of the infrared reflecting black pigment according to the present invention can be controlled to the above-specified ranges by suitably adjusting the composition, calcination conditions and pulverization conditions of the black pigment.

The near infrared reflectance of the infrared reflecting black pigment according to the present invention is controlled such that a near infrared reflectance of the black pigment as measured with respect to a lacquer color sample coating film thereof according to JIS K 5602 is preferably not less than 40%. When the near infrared reflectance of the black pigment is less than 40%, the resulting pigment tends to hardly exhibit a sufficiently high near infrared reflectance. The near infrared reflectance of the black pigment in terms of a near infrared reflectance thereof is more preferably not less than 43%, and even more preferably not less than 45.5%. The near infrared reflectance of the black pigment can be controlled to the above-specified ranges by suitably adjusting the composition, calcination conditions and pulverization conditions of the black pigment.

The infrared reflecting black pigment according to the present invention preferably has a true specific gravity of 4.5 to 6.6 g/cm³. When the true specific gravity of the black pigment is controlled to the above-specified range, a paint prepared using the black pigment can be further enhanced in stability. The true specific gravity of the infrared reflecting black pigment is more preferably 4.6 to 6.5 g/cm³ and even more preferably 5.0 to 6.4 g/cm³. The true specific gravity of the infrared reflecting black pigment can be controlled to the above-specified ranges by suitably adjusting the composition of the black pigment.

The infrared reflecting black pigment according to the present invention preferably has an acid resistance of not more than 1000 ppm in terms of an amount of Cu eluted as measured by the below-described evaluation method. When the amount of Cu eluted is more than 1000 ppm, Cu tends to be readily eluted from the black pigment so that the resulting pigment tends to be deteriorated in quality.

The amount of Cu eluted from the black pigment is more preferably not more than 800 ppm, and even more preferably not more than 500 ppm. The acid resistance of the infrared reflecting black pigment can be controlled to the above-specified ranges by suitably adjusting the composition, calcination conditions and pulverization conditions of the black pigment.

The particle shape of the infrared reflecting black pigment according to the present invention is not particularly limited, and the infrared reflecting black pigment may be in the form of granular particles such as particles having a spherical shape, a granular shape, an octahedral shape, a hexahedral shape, a polyhedral shape or the like, acicular particles such as particles having an acicular shape, a spindle shape, a rice grain shape or the like, and plate-shaped particles. Among these particles, in view of good dispersibility of the resulting black pigment, preferred are spherical particles and granular particles.

In the infrared reflecting black pigment according to the present invention, the surface of respective particles of the black pigment can be coated with a compound of at least one element selected from the group consisting of Si, Al, Zr, Ti, Zn and P or an organic surface-treating agent. By coating the surface of respective particles of the black pigment with these materials, it is possible to readily obtain the effect of improving dispersibility of the resulting black pigment.

Examples of the compound of at least one element selected from the group consisting of Si, Al, Zr, Ti, Zn and P include aluminum compounds such as aluminum salts such as aluminum acetate, aluminum sulfate, aluminum chloride and aluminum nitrate, and alkali salts of aluminic acid such as sodium aluminate; silicon compounds such as water glass #3, sodium orthosilicate and sodium metasilicate; zirconium compounds such as zirconium salts such as zirconium acetate, zirconium sulfate, zirconium chloride and zirconium nitrate; titanium compounds such as titanium salts such as titanium acetate, titanium sulfate, titanium chloride and titanium nitrate; zinc compounds such as zinc salts such as zinc acetate, zinc sulfate, zinc chloride and zinc nitrate; and phosphorus compounds such as phosphoric acid salts such as sodium hydrogen phosphate, sodium ammonium hydrogen phosphate, potassium phosphate, sodium polyphosphate and sodium hexametaphosphate.

Examples of the organic surface-treating agent include stearic acid and salts thereof, rosins, organic silicon compounds such as alkoxy silanes, fluoroalkyl silanes, silane-based coupling agents and organopolysiloxanes, coupling agents such as titanate-based coupling agents, aluminate-based coupling agents and zirconate-based coupling agents, low- molecular weight surfactants or high-molecular weight surfactants, and phosphoric acid compounds.

Specific examples of the organic silicon compounds include alkoxy silanes such as methyl ethoxysilane, dimethyl diethoxysilane, phenyl triethoxysilane, diphenyl diethoxysilane, methyl trimethoxysilane, dimethyl dimethoxysilane, phenyl trimethoxysilane, diphenyl dimethoxysilane, ethyl triethoxysilane, propyl triethoxysilane, butyl triethoxysilane, isobutyl trimethoxysilane, hexyl triethoxysilane, octyl triethoxysilane and decyl triethoxysilane; fluoroalkyl silanes such as trifluoropropyl trimethoxysilane, tridecafluorooctyl trimethoxysilane, heptadecafluorodecyl trimethoxysilane, trifluoropropyl triethoxysilane, heptadecafluorodecyl triethoxysilane and tridecafluorooctyl triethoxysilane; silane-based coupling agents such as vinyl trimethoxysilane, vinyl triethoxysilane, γ-aminopropyl triethoxysilane, γ-glycidoxypropyl trimethoxysilane, γ-mercaptopropyl trimethoxysilane, γ-methacryloyloxypropyl trimethoxysilane, N-(β-aminoethyl)-γ-aminopropyl trimethoxysilane, γ-glycidoxypropylmethyl dimethoxysilane and γ-chloropropyl trimethoxysilane; and organopolysiloxanes such as polysiloxanes, methyl hydrogen polysiloxanes and modified polysiloxanes.

Examples of the titanate-based coupling agents include isopropyl tristearoyl titanate, isopropyl tris(dioctyl pyrophosphate)titanate, isopropyl tri(N-aminoethyl-aminoethyl)titanate, tetraoctyl bis(ditridecyl phosphate)titanate, tetra(2,2-diallyloxymethyl-1-butyl) bis(ditridecyl)phosphate titanate, bis(dioctyl pyrophosphate)oxyacetate titanate and bis(dioctyl pyrophosphate)ethylene titanate.

Examples of the aluminate-based coupling agents include acetalkoxy aluminum diisopropylate, aluminum diisopropoxy monoethyl acetoacetate, aluminum tris(ethyl acetoacetate), aluminum tris(acetyl acetonate).

Examples of the zirconate-based coupling agents include zirconium tetrakis(acetyl acetonate), zirconium dibutoxy bis(acetyl acetonate), zirconium tetrakis(ethyl acetoacetate), zirconium tributoxy monoethyl acetoacetate and zirconium tributoxy acetyl acetonate.

Examples of the low-molecular weight surfactants include alkyl benzene-sulfonic acid salts, dioctyl sulfone-succinic acid salts, alkyl amine-acetic acid salts and alkyl fatty acid salts. Examples of the high-molecular weight surfactants include polyvinyl alcohol, polyacrylic acid salts, carboxymethyl cellulose, acrylic acid-maleic acid salt copolymers and olefin-maleic acid salt copolymers.

Examples of the phosphoric acid compounds include organic phosphorus compounds such as phosphoric acid esters, phosphorous acid esters, acid phosphoric acid esters and phosphonic acid.

The conditions of the surface treatment may vary depending on kinds of the surface-treating agent used, and the amount of the surface-treating agent used therein is usually in the range of 0.1 to 10% by weight and preferably 0.3 to 8.0% by weight based on the black pigment.

Next, the process for producing the infrared reflecting black pigment according to the present invention is described.

The infrared reflecting black pigment comprising the composite oxide according to the present invention can be produced by mixing various raw materials with each other and then calcining the resultant mixture. As the starting materials, there can be used an oxide, a hydroxide, a carbonate, a nitrate, a sulfate, etc., of the above-described respective metal elements.

The method of mixing the starting materials is not particularly limited as long as these materials can be uniformly mixed with each other, and there may be used either a wet-mixing method or a dry-mixing method. In addition, there may also be used a wet synthesis method.

The heat-calcining temperature is preferably 600 to 1100°C and more preferably 650 to 1050°C. The heating atmosphere may be atmospheric air.

The particles obtained after heating may be washed with water and then pulverized by ordinary methods.

In the present invention, the surface of the respective particles of the infrared reflecting black pigment may be coated with a compound of at least one element selected from the group consisting of Si, Al, Zr, Ti, Zn and P. The above surface-coating treatment may be carried out by an ordinary method such as a wet method and a dry method. For example, as the wet method, there may be used the method in which the infrared reflecting black pigment is wet-dispersed to prepare a slurry thereof, and then a soluble compound of at least one element selected from the group consisting of Si, Al and Zr is added to and mixed with the thus obtained slurry while adjusting a pH value of the slurry with an acid or an alkali to coat the black pigment with the soluble compound. As the dry method, there may be used the method in which the infrared reflecting black pigment is subjected to coating treatment with a coupling agent comprising at least one element selected from the group consisting of Si, Al and Zr in an apparatus such as a Henschel mixer.

In the dry method, as the apparatus used upon the mixing and stirring, there are preferably used those apparatuses which are capable of applying a shear force to a layer of the particles, more preferably those apparatuses which are capable of conducting application of shear force, spatula-stroking and compression at the same time. For example, there may be used wheel-type kneaders, ball-type kneaders, blade-type kneaders, roll-type kneaders or the like. Among these apparatuses, the wheel-type kneaders can be more effectively used in the present invention.

Specific examples of the wheel-type kneaders used in the above dry method include an edge runner (equivalent to a "mix muller", a "Simpson mill" or a "sand mill"), a multi-mull, a Stotz mill, a wet pan mill, a Conner mill, a ring muller, or the like. Among these kneaders, the edge runner, the multi-mull, the Stotz mill, the wet pan mill and the ring muller are preferred, and the edge runner is more preferred. Specific examples of the ball-type kneaders include a vibration mill or the like. Specific examples of the blade-type kneaders include a Henschel mixer, a planetary mixer, a Nauta mixer or the like. Specific examples of the roll-type kneaders include an extruder or the like.

As the apparatus used upon mixing and stirring the black pigment and the surface-treating agent, there are preferably used those apparatuses which are capable of applying a shear force to a layer of the particles, more preferably those apparatuses which are capable of conducting application of shear force, spatula-stroking and compression at the same time. Examples of the above apparatuses include wheel-type kneaders, ball-type kneaders, blade-type kneaders, roll-type kneaders or the like. Among these apparatuses, the wheel-type kneaders can be more effectively used in the present invention.

Specific examples of the wheel-type kneaders used upon mixing and stirring the black pigment and the surface-treating agent include an edge runner (equivalent to a "mix muller", a "Simpson mill" or a "sand mill"), a multi-mull, a Stotz mill, a wet pan mill, a Conner mill, a ring muller, or the like. Among these kneaders, the edge runner, the multi-mull, the Stotz mill, the wet pan mill and the ring muller are preferred, and the edge runner is more preferred. Specific examples of the ball-type kneaders include a vibration mill or the like. Specific examples of the blade-type kneaders include a Henschel mixer, a planetary mixer, a Nauta mixer or the like. Specific examples of the roll-type kneaders include an extruder or the like.

Next, the paint comprising the infrared reflecting black pigment according to the present invention is described.

The amount of the infrared reflecting black pigment compounded in the paint according to the present invention is usually 0.5 to 100 parts by weight on the basis of 100 parts by weight of a paint base material. In the consideration of good handling properties of the obtained paint, the amount of the infrared reflecting black pigment compounded in the paint is preferably 1.0 to 100 parts by weight on the basis of 100 parts by weight of a paint base material.

The paint base material may comprise a resin, a solvent and, if required, optional components such as fats and oils, a defoaming agent, an extender pigment, a drying accelerator, a surfactant, a curing accelerator and other assistants.

As the resin, there may be used various resins ordinarily used for solvent-based paints or oil-based printing inks. Examples of the resins include acrylic resins, alkyd resins, polyester resins, polyurethane resins, epoxy resins, phenol resins, melamine resins, amino resins, vinyl chloride resins, silicone resins, rosin-based resins such as gum rosins and lime rosins, maleic acid resins, polyamide resins, nitrocellulose, ethylene-vinyl acetate copolymer resins, rosin-modified resins such as rosin-modified phenol resins and rosin-modified maleic acid resins, petroleum resins and fluororesins. In particular, as the resins for water-based paints, there may be used those resins ordinarily used for water-based paints and water-based inks. Examples of the resins used for water-based paints and water-based inks may include water-soluble acrylic resins, water-soluble styrene-maleic acid resins, water-soluble alkyd resins, water-soluble melamine resins, water-soluble urethane emulsion resins, water-soluble epoxy resins, water-soluble polyester resins, water-soluble fluororesins, etc.

As the solvent, there may be used those solvents ordinarily used for solvent-based paints. Examples of the solvents used for the solvent-based paints include soybean oil, toluene, xylene, a thinner, butyl acetate, methyl acetate, methyl isobutyl ketone, methyl cellosolve, ethyl cellosolve, propyl cellosolve, butyl cellosolve, glycol ether-based solvents such as propylene glycol monomethyl ether, ester-based solvents such as ethyl acetate, butyl acetate and amyl acetate, aliphatic hydrocarbon-based solvents such as hexane, heptane and octane, alicyclic hydrocarbon-based solvents such as cyclohexane, petroleum-based solvents such as mineral spirits, ketone-based solvents such as acetone and methyl ethyl ketone, alcohol-based solvents such as methyl alcohol, ethyl alcohol, propyl alcohol and butyl alcohol, and aliphatic hydrocarbons.

As the solvents for water-based paints, there may be used mixtures of water with those water-soluble organic solvents ordinarily used for water-based paints. Examples of the water-soluble organic solvents used for water-based paints include alcohol-based solvents such as ethyl alcohol, propyl alcohol and butyl alcohol; glycol ether-based solvents such as methyl cellosolve, ethyl cellosolve, propyl cellosolve and butyl cellosolve; oxyethylene or oxypropylene addition polymers such as diethylene glycol, triethylene glycol, polyethylene glycol, dipropylene glycol, tripropylene glycol and polypropylene glycol; alkylene glycols such as ethylene glycol, propylene glycol and 1,2,6-hexanetriol; and glycerol, 2-pyrrolidone and the like.

Examples of the fats and oils include boiled oils obtained by processing dry oils such as linseed oil, tung oil, oiticica oil and safflower oil.

Examples of the defoaming agent include commercially available products such as "NOPCO 8034 (tradename)", "SN DEFOAMER 477 (tradename)", "SN DEFOAMER 5013 (tradename)", "SN DEFOAMER 247 (tradename)" and "SN DEFOAMER 382 (tradename)" all produced by Sun Nopco Co., Ltd., and "ANTI-FOAM 08 (tradename)" and "EMULGEN 903 (tradename)" both produced by Kao Corp.

The paint comprising the infrared reflecting black pigment according to the present invention exhibits excellent dispersibility. The dispersibility of the paint as measured according to the evaluation method described in Examples is used to evaluate easiness of redispersibility (uniform dispersibility) of the paint.

Next, the resin composition comprising the infrared reflecting black pigment according to the present invention is described.

The amount of the infrared reflecting black pigment compounded in the resin composition according to the present invention may be in the range of 0.01 to 200 parts by weight on the basis of 100 parts by weight of a resin in the resin composition. In the consideration of good handling properties of the obtained resin composition, the amount of the infrared reflecting black pigment compounded therein is preferably 0.05 to 150 parts by weight and more preferably 0.1 to 100 parts by weight.

The base material for the resin composition according to the present invention may include, in addition to the infrared reflecting black pigment and a known thermoplastic resin, various optional additives such as a lubricant, a plasticizer, an antioxidant, an ultraviolet absorber and various stabilizers, if required.

Examples of the resin compounded in the resin composition include polyolefins such as polyethylene, polypropylene, polybutene and polyisobutylene; thermoplastic resins such as polyvinyl chloride, polymethyl pentene, polyethylene terephthalate, polybutylene terephthalate, polystyrene, styrene-acrylate copolymers, styrene-vinyl acetate copolymers, acrylonitrile-butadiene-styrene copolymers, acrylonitrile-EPDM-styrene copolymers, acrylic resins, polyamides, polycarbonates, polyacetals and polyurethanes; rosin-modified maleic acid resins; phenol resins; epoxy resins; polyester resins; silicone resins; rosin esters; rosins; natural rubbers; and synthetic rubbers.

The amount of the additives added to the resin composition may be not more than 50% by weight on the basis of a total weight of the infrared reflecting black pigment and the resin. When the content of the additives in the resin composition is more than 50% by weight, the obtained resin composition tends to be deteriorated in moldability.

The resin composition according to the present invention may be produced by previously intimately mixing the raw resin material with the infrared reflecting black pigment, and then applying a strong shear force to the resultant mixture under heating by using a kneader or an extruder to deaggregate or break agglomerated particles of the infrared reflecting black pigment and uniformly disperse the infrared reflecting black pigment in the resin composition. Then, the resultant resin composition may be molded into a desired shape according to the objects and applications thereof.

Also, the resin composition according to the present invention may be produced via master batch pellets.

The master batch pellets used in the present invention may be produced by the method of mixing a binder resin as the paint base material or the resin composition base material with the infrared reflecting black pigment, if required, by using a mixing apparatus such as a ribbon blender, a Nauta mixer, a Henschel mixer and a super mixer, and then kneading and molding the resultant mixture by using a known single-screw kneading extruder or a twin-screw kneading extruder, etc., followed by cutting the resultant molded material, or may be produced by the method of kneading the above mixture by using a Banbury mixer, a press kneader, etc., and then subjecting the resulting kneaded material to pulverization or molding and cutting.

Upon feeding the binder resin and the infrared reflecting black pigment to the kneader, predetermined amounts of these materials may be respectively fed thereto at predetermined ratios, or a mixture of both the materials may be fed thereto.

The average major axis diameter of the master batch pellets used in the present invention is in the range of 1 to 6 mm and preferably 2 to 5 mm, whereas the average minor axis diameter thereof is in the range of 2 to 5 mm and preferably 2.5 to 4 mm. When the average major axis diameter of the master batch pellets is less than 1 mm, the workability upon production of the pellets tends to be deteriorated. When the average major axis diameter of the master batch pellets is more than 6 mm, the difference in size between the master batch pellets and diluting binder resin particles tends to be considerably large, so that it may be difficult to sufficiently disperse the pellets in the diluting binder resin. Further, the master batch pellets may have various shapes such as an amorphous shape, a granular shape such as a spherical shape, a cylindrical shape, a flake-like shape, etc.

The binder resin used for production of the master batch pellets used in the present invention may be the same as the resin to be included in the resin composition.

Meanwhile, the composition of the binder resin used in the master batch pellets may be the same as or different from that of the diluting binder resin. When using the resin having a different composition from that of the diluting binder resin, the resin to be included in the master batch pellets may be determined in the consideration of various properties so as to attain a good compatibility between these resins.

The amount of the infrared reflecting black pigment compounded in the master batch pellets is 1 to 200 parts by weight, preferably 1 to 150 parts by weight and more preferably 1 to 100 parts by weight on the basis of 100 parts by weight of the binder resin. When the amount of the infrared reflecting black pigment compounded in the master batch pellets is less than 1 part by weight, the resulting master batch pellets tend to exhibit an insufficient melt viscosity upon melt-kneading, so that it may be difficult to suitably disperse and mix the infrared reflecting black pigment in the master batch pellets. When the amount of the infrared reflecting black pigment compounded in the master batch pellets is more than 200 part by weight, the amount of the binder resin compounded therein tends to be comparatively lower than that of the infrared reflecting black pigment, so that it may be difficult to suitably disperse and mix the infrared reflecting black pigment in the master batch pellets. Further, in such a case a slight change in amount of the master batch pellets added tends to cause a considerable change in amount of the infrared reflecting black pigment compounded in the resin composition, so that it may be difficult to attain a desired content of the infrared reflecting black pigment in the resin composition, resulting in severe mechanical wear thereof.

### EXAMPLES

Typical Examples of the present invention are described as follows.

The average particle diameter of the particles was measured by an air permeability method (Fisher method).

The specific surface area was expressed by the value measured by a BET method.

The true specific gravity was expressed by the value measured by a dry automatic density meter "AccuPyc II-1340" manufactured by Micromeritics Instrument Corp.

The contents of respective metal elements in the infrared reflecting black pigment were measured by a fluorescent X-ray analyzer "3063M Model" (manufactured by RIGAKU DENKI KOGYO CO., LTD.) according to JIS K0119 "General Rule of Fluorescent X-Ray Analysis".

The hue values (L*, a* and b* values) of the infrared reflecting black pigment were determined as follows. That is, 0.5 g of a sample and 0.5 mL of castor oil were intimately kneaded with each other by a Hoover's muller to form a paste. Added to the thus obtained paste was 4.5 g of clear lacquer, and the resulting mixture was intimately kneaded to form a paint. The thus obtained paint was applied on a cast-coated paper by using a 150 µm (6-mil) applicator to produce a coating film piece (having a film thickness of about 30 µm). The hue of the thus obtained coating film piece was measured using a colorimeter/color difference meter "CR-300" (manufactured by KONICA MINOLTA SENSING Inc.), and expressed by color specification indices (L*, a* and b* values) according to JIS Z 8729.

The reflecting properties of the infrared reflecting black pigment in each of a visible light wavelength range and an infrared wavelength range was determined as follows. That is, reflectance values (%) of the coating film piece prepared for the above hue measurement were measured in a wavelength range of 250 to 2500 nm using a spectrophotometer "U-4100" manufactured by Hitachi High-Technologies Corp. More specifically, the near infrared reflectance values were measured according to JIS K 5602.

The acid resistance of the infrared reflecting black pigment was evaluated as follows. That is, according to "Test methods for pigments - Part 8: Resistance to chemicals" prescribed in JIS K 5101-8,2 g of the sample pigment and 20 mL of 5% sulfuric acid were charged into a test tube. The test tube was sealed and shaken well, and the resulting solution was allowed to stand for 15 min. Thereafter, the test tube was sealed again and shaken well, and the resulting solution was allowed to stand for 30 min. Thereafter, the resulting solution was filtered to separate solid components therefrom, and then the amount of Cu eluted in the solution was measured and analyzed using an ICP emission spectrophotometer "iCAP-6500DUO" manufactured by Thermo Electron Co., Ltd.

The paint comprising the infrared reflecting black pigment was evaluated in the following manner. That is, 90 g of glass beads, 10 g of the black pigment, 16.0 g of an amino-alkyd resin (clear) and 6.0 g of a solvent were mixed with each other in a mayonnaise bottle (inner capacity: 140 mL). The resulting mixture was subjected to dispersing treatment for 40 min using a paint conditioner. Thereafter, 50 g of an aluminum alkyd resin (clear) was further added to the bottle, and then the resulting mixture was subjected to dispersing treatment for 5 min using a paint conditioner to separate the glass beads therefrom, and then was allowed to stand for 24 hr to precipitate the black pigment. The thus obtained precipitate was stirred by a stirrer to evaluate redispersibility of the black paint by examining whether the precipitate was dispersed easily (uniformly dispersed) or hardly. When evaluated as "hardly", the evaluation was further classified into "precipitation" and "separation (flooding)".

### Example 1:

The respective compounds as raw materials were weighed and mixed with each other in such amounts as shown in Table 1 below, and then the resulting mixture was calcined at 800°C for 2 hr in an electric furnace to thereby obtain a calcined product. The resulting calcined product was pulverized, thereby obtaining an infrared reflecting black pigment. The thus obtained infrared reflecting black pigment was subjected to X-ray diffraction. As a result of the X-ray diffraction, it was confirmed that the infrared reflecting black pigment was a Cu-Zn composite oxide and a black pigment having a BET specific surface area of 3.7 m²/g and an average particle diameter of 1.5 µm.

The thus obtained pigment was subjected to lacquer color painting to prepare a color sample thereof, and measured and evaluated for its reflectance in a wavelength range of 250 to 2500 nm using a spectrophotometer "U-4100" manufactured by Hitachi. As a result of the above measurement and evaluation, it was confirmed that the resulting pigment had a near infrared reflectance of 54.8% as measured in a wavelength range of 780 to 2500 nm.

### Example 2:

The same procedure as in Example 1 was conducted except that various raw materials were dissolved in an acid aqueous solution and then the resulting solution was neutralized using an alkali aqueous solution to synthesize a precursor of the pigment by the wet method, followed by calcination of the precursor at 850°C for 2 hr, thereby obtaining a black pigment.

### Examples 3 and 4:

The same procedure as in Example 1 was conducted except that the composition ratios of the raw materials and the calcination temperature were changed, thereby obtaining black pigments.

### Example 5:

The same procedure as in Example 1 was conducted except that the composition ratios of the raw materials and the calcination temperature were changed, thereby obtaining a black pigment. Next, the thus obtained black pigment was wet-dispersed in water to obtain a slurry thereof. While adding 0.5% by weight of a water glass dropwise to the slurry of the black pigment maintained at 70°C, the pH value of the slurry was adjusted to 7 by using hydrochloric acid or sodium hydroxide, and then the slurry was held under the same conditions for one hour. Thereafter, the resulting slurry was subjected to water-washing, dehydration, drying and pulverization treatments.

### Examples 6, 7 and 8:

The same procedure as in Example 1 was conducted except that the composition ratios of the raw materials and the calcination temperature were changed, and the various surface-treating agents were dry-mixed with the raw materials, thereby obtaining black pigments.

### Comparative Examples 1 to 3:

In Comparative Example 1, a copper oxide "NB" produced by Nissin Chemco Co., Ltd., was used as the raw material. In Comparative Example 2, a mixture of the copper oxide "NB" used in Comparative Example 1 and ZnCO₃ was used as the raw material. In Comparative Example 3, a mixture of the copper oxide "NB" used in Comparative Example 1, Al(OH)₃ and ZnCO₃ was used as the raw material.

The production conditions for producing the above infrared reflecting black pigments are shown in Table 1; various properties of the resulting infrared reflecting black pigments are shown in Tables 2; and various properties of the resulting paints and coating films are shown in Table 3.

**Table 1**

| | Production of infrared reflecting black pigment | | | |
|---|---|---|---|---|
| | Raw materials (wt%) | | | |
| | CuO | CuCO₃ | ZnCO₃ | Al(OH)₃ |
| Comp. Example 1 | 100 | | | |
| Comp. Example 2 | 71.7 | | 28.3 | |
| Comp. Example 3 | 53.1 | | 20.9 | 26.0 |
| Example 1 | | 49.6 | 50.4 | |
| Example 2 | | 88.7 | 11.3 | |
| Example 3 | | 63.7 | 16.2 | 20.1 |
| Example 4 | | 36.9 | 28.1 | 35.0 |
| Example 5 | | 66.3 | 33.7 | |
| Example 6 | | 33.0 | 67.0 | |
| Example 7 | | 87.5 | 5.6 | 6.9 |
| Example 8 | | 63.7 | 16.2 | 20.1 |

| | Calcination temperature (°C) | | Surface treatment | |
|---|---|---|---|---|
| Kind | | | wt% | |
| Comp. Example 1 | | | None | 0.0 |
| Comp. Example 2 | | | None | 0.0 |
| Comp. Example 3 | | | None | 0.0 |
| Example 1 | 800 | | None | 0.0 |
| Example 2 | 850 | | None | 0.0 |
| Example 3 | 600 | | None | 0.0 |
| Example 4 | 700 | | None | 0.0 |
| Example 5 | 900 | | Si | 0.5 |
| Example 6 | 750 | | Al | 2.0 |
| Example 7 | 700 | | Zr | 1.5 |
| Example 8 | 800 | | Ti | 1.0 |

| | | | | |
|---|---|---|---|---|
| Note: * In Comparative Example 2, a mixture of ZnCO₃ was used. In Comparative Example 3, a mixture of ZnCO₃ and Al(OH)₃ was used. | | | | |

**Table 2**

| | Various properties of infrared reflecting black pigment | | | |
|---|---|---|---|---|
| | Composition (mol% of metal element) | | | Constitutional elements, etc. |
| | Cu | Zn | Al | |
| Comp. Example 1 | 100 | | | Cu,O |
| Comp. Example 2* | 80.0 | 20.0 | | Cu,Zn,O |
| Comp. Example 3* | 57.1 | 14.3 | 28.6 | Cu,Zn,Al,O |
| Example 1 | 50.0 | 50.0 | | Cu,Zn,O |
| Example 2 | 88.9 | 11.1 | | Cu,Zn,O |
| Example 3 | 57.1 | 14.3 | 28.6 | Cu,Zn,Al,O |
| Example 4 | 30.8 | 23.1 | 46.1 | Cu,Zn,Al,O |
| Example 5 | 66.7 | 33.3 | | Cu,Zn,O |
| Example 6 | 33.3 | 66.7 | | Cu,Zn,O |
| Example 7 | 84.2 | 5.3 | 10.5 | Cu,Zn,Al,O |
| Example 8 | 57.1 | 14.3 | 28.6 | Cu,Zn,Al,O |

| | Properties of particles | | | Acid resistance |
|---|---|---|---|---|
| BET specific surface area (m²/g) | Average particle diameter (µm) | True specific gravity (g/cm³) | Amount of Cu eluted (ppm) | |
| Comp. Example 1 | 3.8 | 1.7 | 6.9 | 10500 |
| Comp. Example 2* | 7.8 | 0.3 | 5.7 | 1908 |
| Comp. Example 3* | 7.0 | 0.7 | 4.2 | 3600 |
| Example 1 | 3.7 | 1.5 | 6.2 | 220 |
| Example 2 | 4.0 | 1.3 | 5.9 | 360 |
| Example 3 | 18.0 | 0.3 | 5.5 | 180 |
| Example 4 | 13.4 | 0.6 | 5.2 | 120 |
| Example 5 | 3.2 | 1.5 | 6.3 | 290 |
| Example 6 | 5.0 | 1.4 | 5.9 | 130 |
| Example 7 | 9.2 | 0.9 | 6.1 | 330 |
| Example 8 | 9.7 | 0.8 | 5.7 | 210 |

| | | | | |
|---|---|---|---|---|
| Note: * In Comparative Example 2, a mixture of ZnCO₃ was used. In Comparative Example 3, a mixture of ZnCO₃ and Al(OH)₃ was used. | | | | |

**Table 3**

| | Properties of paint | Properties of coating film | | | |
|---|---|---|---|---|---|
| | | Hue (primary color) | | | Near infrared reflectance |
| | Paint stabilization | L* | a* | b* | (%) |
| Comp. Example 1 | Hardly (precipitation) | 24.7 | 0.6 | 0.4 | 36.6 |
| Comp. Example 2 | Hardly (separation) | 25.6 | 0.7 | 0.4 | 37.5 |
| Comp. Example 3 | Hardly (separation) | 25.7 | 0.7 | 0.4 | 38.0 |
| Example 1 | Easily | 24.6 | 1.3 | -0.6 | 54.8 |
| Example 2 | Easily | 22.7 | 0.9 | 0.1 | 43.7 |
| Example 3 | Easily | 24.0 | 1.4 | 1.3 | 54.3 |
| Example 4 | Easily | 25.4 | 1.2 | 0.5 | 59.2 |
| Example 5 | Easily | 23.6 | 0.9 | -0.5 | 49.5 |
| Example 6 | Easily | 27.2 | 1.9 | -0.9 | 62.7 |
| Example 7 | Easily | 23.4 | 1.2 | 0.9 | 50.6 |
| Example 8 | Easily | 23.8 | 1.0 | 0.2 | 54.1 |

### INDUSTRIAL APPLICABILITY

The infrared reflecting black pigment according to the present invention is excellent in infrared reflecting properties and comprises no harmful elements such as Cr⁶⁺ and Co, and therefore is suitable as a safe infrared reflecting black pigment.

Also, the resin composition comprising the infrared reflecting black pigment according to the present invention is excellent in infrared reflecting properties, and therefore can be used in the following applications when forming the resin composition into a sheet or a film by known methods.

The sheet obtained from the resin composition comprising the infrared reflecting black pigment according to the present invention has a black color. Therefore, when the sheet is applied to agricultural mulching sheets, it is possible to prevent emergence and development of weeds and further suppress increase in temperature of a ground surface owing to its excellent infrared reflecting properties. Thus, the sheet can be suitably used as a black agricultural mulching sheet.

Similarly, the sheet obtained from the resin composition comprising the infrared reflecting black pigment according to the present invention can be used as a back sheet for solar batteries. The solar battery module includes a plurality of solar cell elements whose front and rear surfaces are protected with a covering material. The back sheet for protecting a rear surface of the respective solar cell elements preferably has a high reflectance in view of a high power conversion efficiency, and is preferably in the form of a black-colored back sheet in view of a good design. In addition, the solar cell elements tend to be deteriorated in power generation efficiency as the temperature is raised. The sheet obtained from the resin composition comprising the infrared reflecting black pigment according to the present invention is fully provided with properties required as the back sheet for solar batteries and therefore can be suitably used as a back sheet for solar batteries.

Also, in order to hardly see an inside of vehicles from outside, a tinted film have been frequently attached onto a surface of a windshield glass thereof. The film is also required to have properties of suppressing increase in temperature within a compartment of vehicles. The film obtained from the resin composition comprising the infrared reflecting black pigment according to the present invention exhibits an excellent blackness and excellent infrared reflecting properties, and therefore can be suitably used as a tinted film to be attached onto a window glass of vehicles and buildings.

## Claims

1. An infrared reflecting black pigment which comprises a composite oxide comprising Cu and Zn and which has a Cu content of 20 to 95 mol% based on a total amount of whole metal elements and a Zn content of 5 to 80 mol% based on a total amount of whole metal elements.

2. An infrared reflecting black pigment which comprises a composite oxide comprising Cu, Zn and Al and which has a Cu content of 20 to 97 mol% based on a total amount of whole metal elements, a Zn content of 1 to 30 mol% based on a total amount of whole metal elements, and an Al content of 2 to 60 mol% based on a total amount of whole metal elements.

3. The infrared reflecting black pigment according to claim 1 or 2, wherein the black pigment has a blackness (L* value) of not more than 29.

4. The infrared reflecting black pigment according to any one of claims 1 to 3, wherein the black pigment has a near infrared reflectance of not less than 40%.

5. The infrared reflecting black pigment according to any one of claims 1 to 4, wherein the black pigment has an acid resistance of not more than 1000 ppm.

6. The infrared reflecting black pigment according to any one of claims 1 to 5, wherein a surface of the infrared reflecting black pigment is surface-treated with a compound of at least one element selected from the group consisting of Si, Al, Zr, Ti, Zn and P or an organic surface-treating agent.

7. A paint comprising the infrared reflecting black pigment as claimed in any one of claims 1 to 6.

8. A resin composition colored with the infrared reflecting black pigment as claimed in any one of claims 1 to 6.
